# EUROPEAN PATENT SPECIFICATION

(11) **EP 3 126 569 B1**
(45) Date of publication and mention of the grant of the patent: **02.05.2018**
(21) Application number: 15718249.4
(22) Date of filing: 27.03.2015
(51) Int. Cl.: D21C 11/00

(54) **METHOD FOR HANDLING SPENT WASH SOLUTION OF A LIGNIN-RECOVERY PROCESS**
VERFAHREN ZUR HANDHABUNG EINER VERBRAUCHTEN WASCHLÖSUNG EINES LIGNINRÜCKGEWINNUNGSVERFAHRENS
PROCÉDÉ DE TRAITEMETN D'UNE SOLUTION DE LAVAGE USÉE D'UN PROCESSUS DE RÉCUPÉRATION DE LIGNINE

(30) Priority: 03.04.2014 FI 20145323
(43) Date of publication of application: 08.02.2017
(73) Proprietor: Andritz Oy, 00180 Helsinki (FI)
(72) Inventor: MCKEOUGH, Paterson, 10120 Tähtelä (FI)
(74) Representative: Hoffmann Eitle
(86) International application number: PCT/FI2015/050212
(87) International publication number: WO 2015/150626

(56) References cited:
- WO-A1-2006/038863
- WO-A1-2008/079072
- WO-A2-2008/152188
- US-A1- 2008 214 796
- \HMAN F ET AL: "Filtration properties of lignin precipitated from black liquor", INTERNATIONAL CHEMICAL RECOVERY CONFERENCE, XX, XX, 11 June 2001 (2001-06-11), pages 19-25, XP002993836,

## Description

### Technical field

Lignin may be removed from spent alkaline pulping liquor (black liquor) by first acidifying the liquor and then separating the resulting lignin precipitate. The separated material is usually washed in order to obtain a solid product comprised primarily of lignin and having a reasonably low level of impurity. At least one washing stage is usually undertaken under acidic conditions. The present method deals with the handling of the spent wash solution which is typically in the form of one or more filtrates. The lignin product may be utilized as a fuel, as a material or as a chemical in a range of potential applications.

### Prior art

The most commonly applied method for recovering reasonably pure lignin from spent alkaline pulping liquor, commonly termed black liquor, involves the following Steps:
1. Acidification of the liquor to a pH typically in the range 9 - 10 (value at 25 °C) using an acid such as carbon dioxide (CO₂) or sulphuric acid (H₂SO₄)
2. Separation of the solid particles thus precipitated by e.g. filtering the slurry
3. Washing the separated material, usually a filter cake, at low pH, typically around pH 2 (value at 25 °C), using an acidified aqueous solution
4. As required, further washing of the separated material.

The black liquor remaining after the separation of the solids in Step 2, often termed lignin-lean black liquor, is invariably recycled to the evaporation plant of the pulp mill. The lignin-lean black liquor is thereby concentrated in the evaporation plant and then combusted in the recovery boiler of the pulp mill, together with black liquor that has not been subjected to the lignin-recovery process. So called green liquor is prepared by dissolving the inorganic compounds exiting the boiler as smelt. Green liquor is subjected to a causticizing treatment, in which calcium hydroxide (Ca(OH)₂), formed by slaking burnt lime (CaO), reacts with sodium carbonate (Na₂CO₃) to form limestone (CaCO₃) and sodium hydroxide (NaOH). CaCO₃ is separated, washed, dewatered and re-converted to CaO in the lime kiln. The liquor, termed white liquor, remaining after separation of CaCO₃ contains the active pulping chemical(s) and is led to the pulping stage. In the case of kraft pulping, the active chemicals are NaOH and sodium sulphide (Na₂S). The stream of separated limestone material is termed lime mud. Thus, by recycling the lignin-lean black liquor to the evaporation plant, the spent pulping chemicals in the lignin-lean liquor are recovered, while the significant amount of organic material still remaining in the lignin-lean liquor is exploited as an energy source in the recovery boiler.

The spent wash solutions produced in Steps 3 and 4 are typically in the form of one or more filtrates. In other words, a filter is used in conjunction with the washing steps. When washing is carried out in a counter-current fashion, fresh wash medium, typically mill water or condensate, is introduced into the last washing step while the spent wash solution from the first washing step is the only stream of spent wash solution exiting the process.

Like the lignin-lean black liquor, the spent wash solution contains both inorganic and organic compounds originating from the black liquor fed to the lignin-recovery plant. In addition, the spent wash solution contains compounds derived from the acid employed in the acidic washing step(s). Typically, sulphuric acid (H₂SO₄) is employed for this purpose, in which case the spent wash solution contains a significant amount of sodium sulphate (Na₂SO₄), the sulphate of which has been derived from the acid. Overall, the spent wash solution obviously contains less dissolved material than the lignin-lean black liquor.

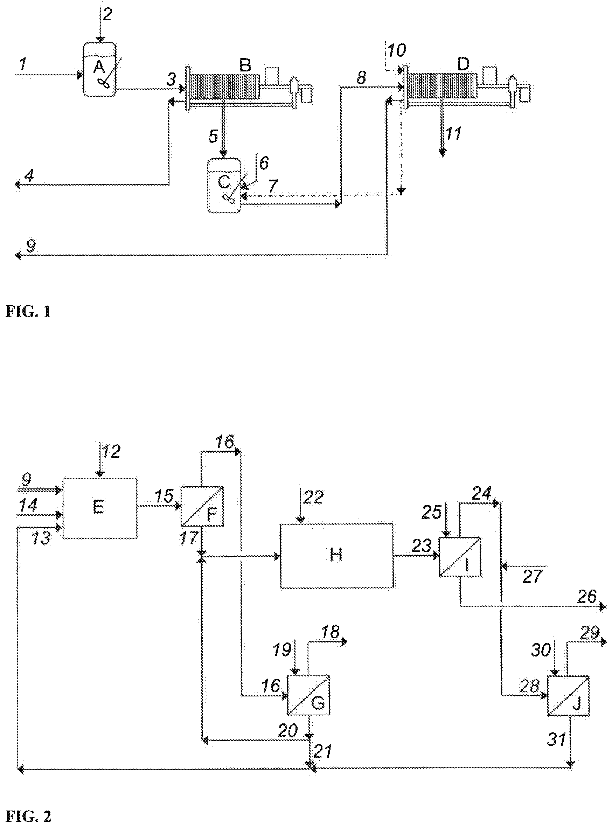

There are two known methods for handling the spent wash solution. The first is simply disposal of the solution as an effluent of the pulp mill. This method is presented, for example, in the patent document GB664811A. The second method, which has understandably been to the forefront in recent years, follows the method for the handling of the lignin-lean black liquor from Step 2. In other words, the spent wash solution is also recycled to the main black-liquor stream, typically to a location in the evaporation plant of the mill, although this location is not necessarily the same as that for the lignin-lean black liquor from Step 2. For example, according to the method presented in the article, Tomani, P., et al, "Lignin removal from different black liquors", Proceedings of the 4th Nordic Wood Biorefinery Conference, Helsinki, Finland, VTT Technology 53 report, 2012, pp. 227-238, both the lignin-lean black liquor (from Filtrate tank 1 in Figure 1 of the article) and the spent wash solution (from Filtrate tank 2 in Figure 1 of the article) are sent to the evaporation plant, the former to a location late in the evaporation sequence, the latter to a location early in the sequence. Note that in the same article it is proposed that, in some cases, the spent wash solution could be used for washing unbleached or oxygen-delignified pulp, while in patent document US2008214796 it is proposed that the spent wash solution be employed in the step where tall-oil soap is acidulated. These are variations of the known method of recycling the spent wash solution to the main black-liquor stream; i.e. in these cases, too, the spent wash solution ends up in the black liquor sent to the evaporation plant.

The cost of evaporating water from the spent wash solution in the evaporation plant is significant. Furthermore, the water to be evaporated from the spent wash solution represents an increase in the total evaporation load in comparison to what the load had been prior to application of the lignin-recovery process. Note that concentrating the lignin-lean black liquor in the evaporator does not increase the load in the same way. Approximately the same amount of water needs to be evaporated from the lignin-lean black liquor as had been earlier evaporated from the black liquor fed to the lignin-recovery plant. On the other hand, the water in the spent wash solution is largely derived from water in the fresh wash solution that is introduced specifically for the needs of the lignin-recovery process. In other words, in the absence of a lignin-recovery process, this water would not be inputted into the chemical recovery cycle of the pulp mill. The extra evaporation load resulting from the input of water in the fresh wash solution may restrict application of a lignin-recovery process. For example, if, to start with, the evaporation plant is running at maximum load, obviously application of lignin recovery requires simultaneous expansion of the evaporation plant.

Another detrimental aspect of the known method of handling the spent wash solution is that the costs and difficulties are in direct proportion to the amount of fresh wash solution employed in the washing process. The purity of the final lignin product is naturally dependent on the amount of fresh wash solution introduced into the washing process. So, as demands on the purity of lignin product are tightened up, the detrimental aspects of the known method of handling the spent wash solution become more pronounced.

In the light of the prior art, there is a clear need for an alternative method of handling the spent wash solution, a method that (1) does not incur the significant costs associated with evaporating water from the solution and (2) does not lead to an increase in the overall load on the evaporator.

An object of the present invention is to provide a method which can meet this need.

### Description of the invention

The present invention, as defined in the current claim 1, is a new method for handling the spent wash solution produced when washing lignin that has been precipitated and then separated from spent alkaline pulping liquor, with at least one washing step being conducted under acidic conditions. According to the new method, at least part of the spent wash solution is introduced into the chemical recovery cycle at a location after the recovery boiler but before the pulp-washing stage. More precisely, the spent wash solution is introduced at a location in that part of the cycle which starts at, and includes, the smelt dissolving stage and ends at, and includes, the pulping stage. For the present purposes, the pulping stage is defined as terminating immediately upstream of the first pulp-washing operation, which may, in fact, be carried out in the same vessel as the pulping stage. The pulping stage typically comprises a feed system for cellulosic fibrous organic material, such as wood chips, and at least one treatment vessel, such as a cooking vessel, in which white liquor is used to produce pulp. Spent wash solution may be added to the feed material in the feed system and/or to the treatment vessel before any washing stage.

Green liquor treatment comprises separation of solid impurities and dregs from green liquor, and treating the dregs for proper disposal. The dregs are washed. White liquor preparation comprises slaking and causticizing green liquor to white liquor, separation of solid lime and white liquor from each other, typically by filtering. The lime mud is washed and dewatered.

In preferred embodiments of the new method, input of other water and/or aqueous solution into the chemical recovery cycle after the recovery boiler is adjusted so that, as a consequence of the introduction of the spent wash solution, the amount of water in the white liquor going to the pulping line is not significantly increased. In other words, water added with the spent wash solution preferably substitutes, to a large extent, water that would otherwise be inputted to the recovery cycle in conjunction with the preparation of white liquor. For example, the spent wash solution is used to substitute (1) part of the water and/or aqueous solution employed in the dissolution of recovery-boiler smelt and/or (2) part of the water and/or aqueous solution, such as condensate, used for preparing a dilute slurry of lime mud prior to the final washing and dewatering of the lime mud. In other words, among others, two preferred locations for the addition of the spent wash solution are (1) the smelt dissolving tank and (2) the location where unwashed lime mud is diluted. Note that, in the case of addition to the smelt dissolving tank, the spent wash solution may be added via the vent gas scrubber of the tank.

The present method - adding the spent wash solution to the chemical-recovery cycle after the recovery boiler - has not been proposed in the prior art. Furthermore, for a number of reasons, a person skilled in the art would not consider the method obvious on the basis of the prior art. Three such reasons are given in the following.
1. The general practice in pulp mills is that waste streams containing significant quantities of black-liquor components are returned to the recovery cycle via the evaporation plant and are thus combusted with the main concentrated black-liquor stream in the recovery boiler. Introduction to the cycle after the recovery boiler, e.g. to the smelt dissolver, has not been practiced because of, among other things, the detrimental behaviour of certain black-liquor organic compounds in operations downstream of the recovery boiler.
2. Generally speaking, the introduction of additional waste solution to the recovery cycle after the recovery boiler should be realized in such a way that the amount of water in the white liquor going to pulping stage is not increased. Thus, if the extra waste solution is to be added to the smelt dissolver, the amount of water or aqueous solution currently being added to the dissolver should be decreased first. At many pulp mills this will be difficult - or even impossible - to accomplish. Generally speaking, there will be no obstacles to substituting part of the current input of water for diluting lime mud, provided that (1) the new input does not leave detrimental impurities in the lime mud that is fed to the lime kiln and (2) the new input does not significantly worsen the filterability of the dilute lime-mud slurry. Generally speaking, solutions containing black-liquor components are ruled out on both counts. Thus, even if the presence of black-liquor components in the green-liquor and white-liquor streams were allowed, on the basis of the prior art it would be reckoned unlikely that the waste solution containing these components could be inputted without increasing the amount of water in the white-liquor stream.
3. Because at least one of the washing steps is carried out under acidic conditions, the overall spent wash solution has a low pH, typically around 2. Presumably another deterrent to adding this acidic solution to the cycle after the recovery boiler has been an assumption that the acidic solution would then consume alkali that is destined for use as an active pulping chemical.

In the prior art, insufficient attention has been given to (1) the detailed composition of the spent wash solution and (2) what this composition means for subsequent handling of the solution in ways different from the previously known ways.

The spent wash solution certainly contains compounds originating from the black liquor but it does not contain the full range of black-liquor compounds. In fact, surprisingly, only one group of organic compounds and only one inorganic salt are present in significant quantities in the spent wash solution.

The lignin-recovery process removes a significant part of the lignin contained in the black liquor fed to the lignin-recovery process. The separated solid material from Step 2 contains a considerable amount of entrained lignin-lean black liquor as impurity. The main function of the lignin-washing process is to remove this entrained black liquor. Another function is to liberate sodium still bound to organic compounds. To this end, acid is employed in at least one washing step. The entrained lignin-lean black liquor still contains lignin. However, as a result of the liberation of sodium during the acidic washing step, nearly all of this entrained dissolved lignin precipitates out during the washing process and increases the yield of lignin from the process. The other main group of organic compounds in the entrained lignin-lean black liquor is composed of aliphatic carboxylic acids. The two main subgroups of these acids are (1) so-called volatile acids, such as formic acid and acetic acid, and (2) hydroxy acids, such as glycolic acid, lactic acid, hydroxybutanoic acid and glucoisosaccharinic acid. In the entrained black liquor, these acids are in the form of salts but they are then largely liberated from their salts in the acidic washing step. The liberated acids remain in a dissolved form in the wash solution.

Except for Na₂SO₄, the main inorganic salts in the entrained black liquor react with acid in the acidic washing step. For example, entrained lignin-lean kraft black liquor contains sodium hydrosulphide (NaHS), which reacts liberating hydrogen sulphide (H₂S), and both Na₂CO₃ and sodium bicarbonate (NaHCO₃), which react liberating carbon dioxide (CO₂). The salt formed in these reactions naturally depends on the acid employed. The preferred acid is H₂SO₄, which reacts with sodium-containing compounds to form Na₂SO₄.

Thus, when using the preferred acid H₂SO₄, the only compounds present in significant quantities in the spent wash solution are (1) Na₂SO₄ and (2) aliphatic carboxylic acids. The amounts of other compounds are minor. These other compounds may be ignored when assessing handling options for the spent wash solution. Thus, although it is true that a significant part of the compounds dissolved in the spent wash solution originate from black liquor, the composition of the spent wash solution is very different from that of diluted black liquor. Hence restrictions applied to the handling of waste solutions containing black liquor, as such, are not necessarily applicable to the spent wash solution. Note that explicit information about the main components of the spent wash solution has not been presented in the prior art.

According to the present invention, the spent wash solution may be introduced into the recovery cycle after the recovery boiler. This is unexpected on the basis of the prior art. Costs are incurred but, typically, the costs are only a fraction of those of the known method. In the new method, and with H₂SO₄ as the preferred washing acid, the Na₂SO₄ in the spent wash solution becomes an additional dead load in the white-liquor preparation line and in the pulping line (whereas the increased dead load in the evaporation line is common both to the new method and to the known method based on recycling to the evaporator). When coming into contact with alkaline liquor, e.g. green liquor, the aliphatic carboxylic acids react with alkali thus reforming their acid salts. Note that, at pH 2, a small excess of H₂SO₄ may be present in the spent wash solution. However, the amount of alkali required to neutralize such excess H₂SO₄ is clearly less than that required for the neutralization of the aliphatic carboxylic acids. The salts of these acids further add to the dead load in the white-liquor and pulping lines.

One of the surprising features of the new method is that, despite the addition of the acidic spent wash solution at a location after the recovery boiler, there is no measurable difference in the net consumption of alkali compared to the known handling methods - at least when a mineral acid such as H₂SO₄ is employed in the lignin-washing process. The application of a lignin-recovery process has a major impact on the balance of elements in the pulp mill. For example, when H₂SO₄ is the acid employed in the lignin-washing process, the addition of 1 mole of H₂SO₄ requires, roughly, that 1 mole of Na₂SO₄ is purged from the cycle and 2 moles of NaOH (or 1 mole of Na₂CO₃) are added as make-up. The balance is independent of the location at which the NaOH/Na₂CO₃ is added. Thus, for example, the NaOH/Na₂CO₃ could be added to the lignin-lean black liquor prior to the liquor being recycled to the evaporation plant or, in the case of the new method, it could be added to the spent wash solution prior to the solution being introduced into the cycle after the recovery boiler. The amount of NaOH/Na₂CO₃ make-up is more than enough to neutralize the acidic spent wash solution. More detailed analyses of the pulp-mill sodium-sulphur balances for various cases, covering different handling options for the spent wash solution and different locations for adding NaOH/Na₂CO₃, confirm the above conclusion; namely, that the net alkali consumption is largely independent of whether a known method or the new method is applied for handling the spent wash solution.

In terms of the main impacts, the difference between the known method based on recycling to the evaporator and the new method can thus be summarized as follows. Compared to the known method, the new method increases the dead load in the white-liquor preparation and pulping lines but, provided that the spent wash solution may be inputted without significantly increasing the amount of water in the white liquor, the new method avoids the need to evaporate water from the spent wash solution. The costs associated with the increased dead load in the new method are typically only a fraction of the costs associated with the evaporation of water in the known method. Furthermore, in the new method, the costs are relatively insensitive to the amount of fresh wash solution employed in the lignin-recovery process. If the amount of fresh wash solution is doubled, the costs will, in the majority of cases, hardly change. This is in sharp contrast with the known method in which doubling the amount of fresh wash solution will, in the best case, lead to an approximate doubling of the handling costs. The best case is that in which the capacity of the existing evaporation plant is sufficient for handling the additional spent wash solution. Obviously, costs will increase even more steeply if the evaporation plant has to be expanded.

One essential feature of the present new method is that the compounds originating from the spent wash solution - Na₂SO₄ (when H₂SO₄ is the washing acid) and the salts of aliphatic carboxylic acids - do not disturb, in any measurable way, the key process reactions in the white-liquor preparation line and in the pulping line. Their impact is predominately that of increased dead load.

As discussed earlier, provided that the spent wash solution (1) does not leave detrimental impurities in the lime mud that is fed to the lime kiln and (2) does not significantly worsen the filterability of the dilute lime-mud slurry, it will be possible to replace part of the water employed for diluting unwashed lime mud with the spent wash solution. Waste solutions containing black liquor, as such, are not suitable for inputting in this way. The use of solutions containing the full range of kraft black-liquor components will tend to increase the contents of both "problematic sodium" and "problematic sulphur" in the final lime mud sent to the kiln. "Problematic sodium" is sodium that may be released in the high-temperature zones of the lime kiln and may thus result in the formation of alkali fume. "Problematic sulphur" is sulphur in a reduced form - typically sulphide or hydrosulphide ion - which readily serves as a source of emission of reduced sulphur gases from the kiln. When the preferred washing acid, H₂SO₄, is employed, the spent wash solution contains negligible amounts of both "problematic sodium" and "problematic sulphur". Na₂SO₄ does not release sodium or sulphur when subjected to normal combustion temperatures. The aliphatic carboxylic acids contain neither sodium nor sulphur. Thus, when employing the spent wash solution as part of the medium for diluting lime mud, the contents of problematic impurities in the lime mud sent to the kiln will not be measurably affected.

Generally speaking, the filterability of the dilute lime-mud slurry will be negatively impacted if the spent wash solution contains fine particles or if fine particles precipitate out from the spent wash solution when it is used as part of the aqueous medium for diluting unwashed lime mud. In fact, the spent wash solution is not problematic from these points of view. In the overall lignin precipitation and washing process, the pH is lowered from a very high value, around 13.5, to a low value, around 2. The amount of alkali entrained in the unwashed lime mud is an order of magnitude greater than that required to neutralize the spent wash solution. Thus the spent wash solution becomes highly alkaline when mixed with unwashed lime mud. The fact that, in the precipitation process, the pH has been lowered from a very high value means that virtually all the material dissolved in the acidic spent wash solution is also soluble in alkaline solution. Thus fine particles do not precipitate out from the spent wash solution to any measurable extent when the solution is mixed with unwashed lime mud. The spent wash solution may contain some lignin particles which have passed through the filter cloth during the lignin-washing operation but these particles will re-dissolve completely in the highly alkaline solution.

In conclusion, it is highly likely that, thanks to the particular composition of the spent wash solution, other water input(s) to the recovery cycle after the recovery boiler can be decreased so that the amount of water in the white liquor going to the pulping line is not significantly increased. Among others, two preferred locations for the addition of the spent wash solution are (1) the smelt dissolver and (2) the location where unwashed lime mud is diluted.

In one embodiment of the invention, at least part of the aliphatic carboxylic acid fraction is recovered from the spent wash solution before the solution is introduced into the chemical recovery cycle of the mill.

The present new method is discussed further with reference to the drawings FIGS. 1 - 3. FIG. 1 depicts a typical lignin-recovery process while FIGS. 2 and 3 each highlight a preferred location for introducing spent wash solution to the recovery cycle according to the new method.

The numbers and letters in FIG. 1 refer to the following streams and processing stages:
1. Feed black liquor
2. Carbon dioxide
3. Primary lignin slurry
4. Lignin-lean black liquor (filtrate from filtration of primary slurry)
5. Primary filter cake
6. Sulphuric acid
7. Wash filtrate from second wash step (displacement wash on filter)
8. Lignin slurry from first wash step (re-slurry acidic wash)
9. Spent wash solution (filtrate from filtration of lignin slurry from first wash step)
10. Water and/or aqueous solution (fresh wash medium)
11. Filter cake, comprised essentially of moist lignin.
   A. Reactor for acidification of black liquor
   B. Filter press
   C. Reactor for acidic re-slurry washing step
   D. Filter press.

A typical lignin-recovery process for application at kraft pulp mills is depicted in FIG. 1. A part (*1*) of the black-liquor stream of the mill is acidified with CO₂ (*2*) to pH 10 (value 25 °C) in a stirred acidification reactor (A). Lignin is precipitated, thereby forming primary lignin slurry (*3*) which is then filtered using a filter press (B). The filtrate (*4*) from this step, the so called lignin-lean black liquor, is recycled to the evaporation plant. The primary filter cake (*5*) from the filter press (B) is led to a stirred-tank reactor (C). Sulphuric acid (*6*) and filtrate (*7*) from the second washing step are also introduced to this reactor (C) and the first washing step - an acidic re-slurry wash - is thereby accomplished at a pH around 2 (value 25 °C). The lignin slurry (*8*) formed in this step is filtered using a filter press (D). The filtrate (*9*) formed in the filtration of the lignin slurry (*8*) is the spent wash solution of the lignin-recovery process. The second washing step is a displacement wash on the filter (D). Fresh washing medium (*10*), typically in the form of mill water or condensate, is employed in this step and the filtrate (*7*) thus formed is recycled to the acid-wash reactor (C). The dry matter of the filter cake (*11*) exiting the filter press (D) is comprised of lignin and some residual impurities.

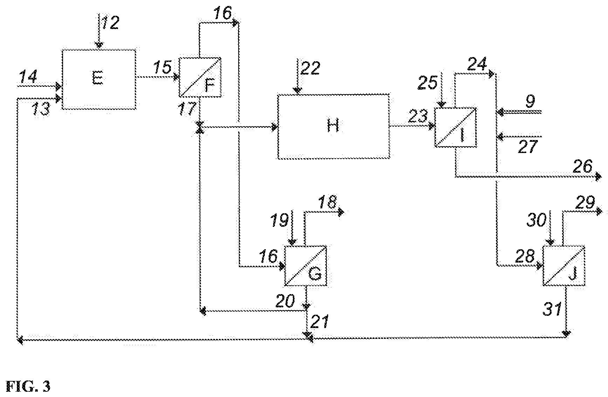

The numbers and letters in FIGS. 2 and 3 refer to the following streams and processing stages:
9. Spent wash solution from the lignin-recovery plant
12. Smelt from the recovery boiler
13. Weak wash (also known as weak white liquor)
14. Water or aqueous solution
15. Raw (unfiltered) green liquor
16. Dregs slurry
17. Filtered green liquor
18. Washed and dewatered dregs
19. Wash water
20. Filtrate from washing and dewatering dregs
21. Filtrate from washing and dewatering dregs
22. Burnt lime
23. Slurry of limestone and white liquor
24. Lime-mud filter cake
25. Wash water
26. White liquor
27. Dilution (wash) water and/or aqueous solution
28. Diluted lime-mud slurry
29. Washed and dewatered lime mud
30. Wash water
31. Weak wash (also known as weak white liquor)

E. Smelt dissolving tank
F. Filter for green liquor
G. Filter for dregs slurry
H. Slaking and causticizing line
I. Filter for slurry of limestone and white liquor
J. Filter for slurry of limestone and weak white liquor

An embodiment of the present new method is depicted in FIG. 2. More specifically, FIG. 2 is a simplified diagram of a plant for preparing white liquor from recovery boiler smelt (lime kiln not shown), displaying also one preferred location for introduction of the spent wash solution to the recovery cycle according to the new method. The stream (*9*) of spent wash solution from the lignin-recovery plant is shown as a double line for emphasis. The flows shown as single lines are those of a conventional white-liquor preparation process. The conventional process is described first. Smelt (*12*) from the recovery boiler (not shown) is led to the dissolving tank (E) to which weak wash (*13*) and possibly additional water or aqueous solution (*14*) are also introduced. Smelt dissolves forming raw (unfiltered) green liquor (*15*) which is then led to the filter (F). Filtered green liquor (*17*) is led to the slaking and causticizing line (H) while the dregs slurry (*16*) goes to a filter (G). Washed and dewatered dregs (*18*) leave the process while filtrate from this step is recycled as green liquor (*20*) and/or as weak wash (*21*) depending on its quality. In the slaking and causticizing line (H), burnt lime (*22*) is first slaked in green liquor, after which green liquor is causticized through reactions with Ca(OH)₂. The slurry (*23*) of limestone and white liquor thus formed is led to a filter (I). The filtrate (*26*) from this step is the white liquor that is employed in the pulping stage. Water and/or aqueous solution, such as condensate, (*27*) is added to dilute the lime-mud filter cake (*24*) leaving the filter (I), and the diluted lime-mud slurry (*28*) is led to a filter (J). Washed and dewatered lime mud (*29*) is sent to the lime kiln for re-burning while the filtrate (*31*) from this step makes up most of the weak wash that is recycled to the smelt dissolver.

In the embodiment of the present invention shown in FIG. 2, the spent wash solution (*9*) from the lignin-recovery plant is introduced to the smelt dissolving tank (E). In order to maintain the amount of water in the white liquor at approximately the same level as previously, the amount of water and/or aqueous solution stream entering the dissolving tank as stream *14* must be correspondingly decreased. At many pulp mills, stream *14* is relatively small - or even non-existent. Thus, at many pulp mills, it will not be possible to apply this embodiment without increasing the amount of water in the white liquor.

Another embodiment of the present new method is depicted in FIG. 3. In fact, the process depicted in FIG. 3 deviates from that of FIG. 2 only in the different location for inputting the spent wash solution. In the embodiment of FIG. 3, the spent wash solution (*9*) from the lignin-recovery plant is used to substitute part of the water and/or aqueous solution (*27*) used for diluting the lime mud before its final washing and dewatering. In other words, in conjunction with the addition of the spent wash solution, the amount of water introduced in stream *27* is decreased so that the total amount of dilution water remains approximately the same. This embodiment is likely to be universally applicable - the new input in the form of spent wash solution does not measurably contribute to the contents of problematic impurities in the final lime-mud stream nor does it have a significant detrimental effect upon the filterability of the dilute lime-mud slurry.

### Example

Lignin-recovery technology is applied at a pulp mill producing 2000 t/d of air-dried pulp (2000 ADt/d). 20 % of the total black-liquor stream of the mill is fed to the lignin-recovery plant. The dry-solids content of the liquor fed to the plant is 30 %. The lignin output is 140 t/d of dry matter. Within the lignin-recovery plant, the lignin precipitated and then separated from the black liquor is washed in two steps, first with an acidic aqueous solution and then with condensate (the fresh wash medium). H₂SO₄ is the acidic compound employed in the first washing step. About 620 t/d of spent wash solution exits the lignin-recovery plant. In accordance with one embodiment of the present invention, the spent wash solution is used to substitute some of the water and/or aqueous solution previously employed for diluting lime mud prior to the final washing and dewatering of the lime mud. The amount of water in the final white liquor utilized in the pulping stage is largely unaltered. In this pulp mill, the total amount of water and/or aqueous solution employed for diluting lime mud is 6500 t/d which is an order of magnitude larger than the amount of spent wash solution. The dominating components dissolved in the spent wash solution are Na₂SO₄ and aliphatic carboxylic acids. The contents of these components in the spent wash solution are as follows:

| | |
|---|---|
| Na₂SO₄: | 6.9 % by weight |
| Aliphatic carboxylic acids: | 2.4 % by weight |

The composition of the spent wash solution is such that the solution may be employed in the dilution of lime mud (1) without measurably affecting the contents of problematic impurities in the final lime mud going to the lime kiln and (2) without measurably worsening the filterability of the dilute lime-mud slurry.

The embodiments of the present invention are not limited to those mentioned or described herein.

## Claims

1. A method for handling spent wash solution (9) produced in the washing of lignin that has been precipitated and then separated from spent alkaline pulping liquor at a pulp mill, in which method the separated lignin is washed in at least one washing step being conducted under acidic conditions, wherein at least part of the spent wash solution (9) from the at least one washing step is introduced into a chemical recovery cycle of the pulp mill at a location in that part of the cycle which includes a smelt dissolving stage, a green liquor treatment, a white liquor preparation, and a pulping stage which comprises a feed system for cellulosic fibrous organic material, such as wood chips, and at least one treatment vessel, such as a cooking vessel, and terminates immediately upstream of a first pulp-washing operation.

2. A method according to claim 1, wherein input of other water and/or aqueous solution (14) into the chemical recovery cycle in that part of the cycle which starts at, and includes, the smelt dissolving stage and ends at, and includes, the pulping stage is adjusted so that water added with the spent wash solution (9) substitutes, to a large extent, water that would otherwise be inputted to the recovery cycle in conjunction with the preparation of white liquor, so that the amount of water in the white liquor going to the pulping line is not significantly increased.

3. A method according to claim 1 or 2, wherein sulphuric acid is the acid employed in at least one washing step.

4. A method according to any of the preceding claims, wherein spent wash solution (9) is introduced as part of the aqueous medium used to dissolve smelt (12) formed in the chemical recovery boiler.

5. A method according to any of the preceding claims, wherein spent wash solution (9) is introduced as part of the aqueous medium used to prepare diluted lime-mud slurry (28) prior to final washing and dewatering of the lime mud.

6. A method according to any of the preceding claims, wherein at least part of the aliphatic carboxylic acid fraction dissolved in the spent wash solution (9) is recovered from the solution before the solution is introduced into the chemical recovery cycle of the mill.

## Patentansprüche

1. Verfahren zur Handhabung einer verbrauchten Waschlösung (9), hergestellt beim Waschen von Lignin, das ausgefällt wurde, und dann von verbrauchter alkalischer Aufschlussflüssigkeit bei einem Zellstoffwerk getrennt wurde, wobei in dem Verfahren das abgetrennte Lignin in mindestens einem Waschschritt, der unter sauren Bedingungen durchgeführt wird, gewaschen wird, wobei mindestens ein Teil der verbrauchten Waschlösung (9) von dem mindestens einen Waschschritt in einen chemischen Rückgewinnungskreislauf des Zellstoffwerks an einem Ort in dem Teil des Zyklus eingeführt wird, der eine Schmelzlösestufe, eine Grünlaugenzubereitungs-, eine Weißlaugenzubereitungs- und eine Zellstoffaufschlussstufe enthält, die ein Zuführungssystem für organisches Zellulosefasermaterial, wie Hackspäne, und mindestens ein Behandlungsgefäß, wie ein Kochgefäß, umfasst und unmittelbar stromaufwärts von einem ersten Zellstoffwaschvorgang endet.

2. Verfahren nach Anspruch 1, wobei eine Eingabe von anderem Wasser und/oder wässriger Lösung (14) in den chemischen Rückgewinnungskreislauf in dem Teil des Zyklus, der bei der Schmelzlösestufe beginnt und diese einschließt und bei der Zellstoffaufschlussstufe endet und diese einschließt, so eingestellt wird, dass mit der verbrauchten Waschlösung (9) zugegebenes Wasser zu einem großen Ausmaß Wasser ersetzt, das sonst zu dem Rückgewinnungskreislauf in Verbindung mit der Herstellung von Weißlauge eingegeben werden würde, so dass die Menge an Wasser in der Weißlauge, die zu der Faserstofflinie gelangt, nicht signifikant erhöht ist.

3. Verfahren nach Anspruch 1 oder 2, wobei Schwefelsäure die in mindestens einem Waschschritt angewendete Säure ist.

4. Verfahren nach einem der vorstehenden Ansprüche, wobei verbrauchte Waschlösung (9) als Teil des zum Auflösen der in dem chemischen Rückgewinnungskessel gebildeten Schmelze (12) verwendeten wässrigen Mediums eingeführt wird.

5. Verfahren nach einem der vorstehenden Ansprüche, wobei verbrauchte Waschlösung (9) als Teil des zum Herstellen der verdünnten Kalkschlammaufschlämmung (28) vor dem letzten Waschen und Entwässern des Kalkschlamms verwendeten wässrigen Mediums eingeführt wird.

6. Verfahren nach einem der vorstehenden Ansprüche, wobei mindestens ein Teil der in der verbrauchten Waschlösung (9) gelösten aliphatischen Karbonsäurefraktion aus der Lösung wiedergewonnen wird, bevor die Lösung in den chemischen Rückgewinnungskreislauf der Mühle eingeführt wird.

## Revendications

1. Procédé de traitement d'une solution de lavage épuisée (9) produite lors du lavage de lignine qui a été précipitée puis séparée de la liqueur de pâte alcaline épuisée dans une usine de pâte, procédé dans lequel la lignine séparée est lavée dans au moins une étape de lavage conduite dans des conditions acides, dans lequel au moins une partie de la solution de lavage épuisée (9) provenant de l'au moins une étape de lavage est introduite dans un cycle de récupération chimique de l'usine de pâte à un endroit dans cette partie du cycle incluant une étape de dissolution de salin, un traitement à la liqueur verte, une préparation de liqueur blanche, et une étape de réduction en pâte comprenant un système d'alimentation en matière organique fibreuse cellulosique, telle que des copeaux de bois, et au moins une cuve de traitement, telle qu'une cuve de cuisson, et se termine immédiatement en amont d'une première opération de lavage de la pulpe.

2. Procédé selon la revendication 1, dans lequel l'entrée d'une autre eau et/ou solution aqueuse (14) dans le cycle de récupération chimique dans cette partie du cycle qui commence à, et inclut, l'étape de dissolution de salin et se termine par, et inclut, l'étape de réduction en pâte est ajustée de sorte que l'eau ajoutée avec la solution de lavage épuisée (9) remplace, dans une large mesure, l'eau qui serait autrement introduite dans le cycle de récupération en même temps que la préparation de liqueur blanche, de sorte que la quantité d'eau dans la liqueur blanche allant à la ligne de réduction en pâte n'est pas significativement augmentée.

3. Procédé selon la revendication 1 ou 2, dans lequel l'acide sulfurique est l'acide utilisé dans au moins une étape de lavage.

4. Procédé selon l'une quelconque des revendications précédentes, dans lequel la solution de lavage épuisée (9) est introduite en tant que partie du milieu aqueux utilisé pour dissoudre le salin (12) formé dans le bouilleur de récupération chimique.

5. Procédé selon l'une quelconque des revendications précédentes, dans lequel la solution de lavage épuisée (9) est introduite en tant que partie du milieu aqueux utilisé pour préparer une bouillie de boue de chaux diluée (28) avant le lavage final et la déshydratation de la boue de chaux.

6. Procédé selon l'une quelconque des revendications précédentes, dans lequel au moins une partie de la fraction d'acide carboxylique aliphatique dissoute dans la solution de lavage épuisée (9) est récupérée à partir de la solution avant l'introduction de la solution dans le cycle de récupération chimique de l'usine.
